(19)

**Europäisches Patentamt**
**European Patent Office**
**Office européen des brevets**

(11) **EP 4 342 067 B1**

(12) **EUROPÄISCHE PATENTSCHRIFT**

(45) Veröffentlichungstag und Bekanntmachung des Hinweises auf die Patenterteilung:
**18.02.2026   Patentblatt 2026/08**

(21) Anmeldenummer: **22727881.9**

(22) Anmeldetag: **05.05.2022**

(51) Internationale Patentklassifikation (IPC):
*H02P 3/10* $^{(2006.01)}$    *H02P 3/12* $^{(2006.01)}$
*H02P 7/03* $^{(2016.01)}$

(52) Gemeinsame Patentklassifikation (CPC):
**H02P 3/10; H02P 3/12; H02P 7/04**

(86) Internationale Anmeldenummer:
**PCT/EP2022/062221**

(87) Internationale Veröffentlichungsnummer:
**WO 2022/243059 (24.11.2022 Gazette 2022/47)**

(54) **ELEKTRISCHE ANTRIEBSEINHEIT FÜR EINE ELEKTRISCHE HANDWERKZEUGMASCHINE UND ELEKTRISCHE HANDWERKZEUGMASCHINE MIT EINER ELEKTRISCHEN ANTRIEBSEINHEIT**

ELECTRIC DRIVE UNIT FOR AN ELECTRIC HAND-HELD MACHINE TOOL AND ELECTRIC HAND-HELD MACHINE TOOL WITH AN ELECTRIC DRIVE UNIT

UNITÉ ÉLECTRIQUE D'ENTRAÎNEMENT POUR UNE MACHINE-OUTIL ÉLECTRIQUE ET MACHINE-OUTIL ÉLECTRIQUE DOTÉE DUNE UNITÉ ÉLECTRIQUE D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **17.05.2021   EP 21174116**

(43) Veröffentlichungstag der Anmeldung:
**27.03.2024   Patentblatt 2024/13**

(73) Patentinhaber: **Hilti Aktiengesellschaft**
**9494 Schaan (LI)**

(72) Erfinder:
• **AUGUSTIN, Christian**
**86554 Pöttmes (DE)**
• **ZHANG, Xiaodong**
**81739 München (DE)**
• **WISSMACH, Walter**
**80637 Muenchen (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**DE-A1- 102013 209 713     DE-A1- 19 604 439**
**US-A- 5 828 194**

**Beschreibung**

GEBIET DER ERFINDUNG

Die vorliegende Erfindung betrifft eine elektrische Antriebseinheit für eine elektrische Handwerkzeugmaschine und eine elektrische Handwerkzeugmaschine mit einer elektrischen Antriebseinheit.

Ein Bohrwerkzeug einer elektrischen Handwerkzeugmaschine, wie einer Bohrmaschine, kann sich beim Bohren in einen Untergrund in diesem verkeilen. Damit sich die Bohrmaschine zum Zeitpunkt des Verkeilens nicht um die eigene Achse dreht und womöglich ein Bediener der Bohrmaschine verletzt wird, ist herkömmlicherweise eine mechanische Schutzeinrichtung in Form einer Rutschkupplung in der Bohrmaschine verbaut. Diese trennt den Antrieb von dem Bohrwerkzeug, die Speisung des Elektromotors wird abgeschaltet und der Elektromotor läuft aus, ohne den Bediener zu gefährden. Soll nun eine elektronische Schutzeinrichtung diese Funktion übernehmen, sind hohe Bremsströme erforderlich, um diesen Vorgang in wenigen Millisekunden durchzuführen, damit die Sicherheit des Bedieners gewährleistet ist.

Um einen hohen Bremsstrom mittels einer elektronischen Schaltung zu erzeugen, wird beispielsweise bei Elektromotoren die Spannung an der Rotorwicklung umgepolt. Die Umpolung wird bei einem Elektromotor herkömmlicherweise durch Verwendung einer Brückenschaltung mit TRIACs (Zweirichtungs-Thyristortrioden), die an einer Wechselspannung betrieben wird, durchgeführt. Bei dieser Verwendung von TRIACs kann die Umpolung nur während eines Nulldurchganges des Wechselstroms erfolgen, da TRIACs nur dann ihren Zustand wechseln, insbesondere abschalten, können. Daraus kann bei dem Abbremsvorgang eine zeitliche Verzögerung von bis zu 10 ms (bei einer Periodendauer einer Netzhalbwelle von 50 Hz) resultieren. Um dennoch innerhalb einer vorbestimmten Zeitspanne den Motor anzuhalten, muss in diesem Fall der Bremsstrom erhöht werden. Dies führt jedoch bei bürstenbetriebenen Elektromotoren zu einem wesentlich höheren Kohlebürstenverschleiß. Zudem kann bei der Verwendung von TRIACs bei der Umpolung der Rotorspannung keine Regelung der im Elektromotor auftretenden Ströme erfolgen. Eine Schaltung zum Abbremsen eines Nebenschlussmotors wird in US 5828194 A offenbart.

Vor diesem Hintergrund besteht eine Aufgabe der vorliegenden Erfindung darin, eine verbesserte Antriebseinheit für eine elektrische Handwerkzeugmaschine vorzuschlagen.

OFFENBARUNG DER ERFINDUNG

Gemäß einem ersten Aspekt wird eine elektrische Antriebseinheit für eine elektrische Handwerkzeugmaschine vorgeschlagen. Die elektrische Antriebseinheit umfasst einen Elektromotor mit einer Statorwicklung und einer Rotorwicklung, eine Ansteuerschaltung zum Ansteuern des Elektromotors und eine Anschlusseinheit zum Koppeln einer Energiequelle zum Antreiben des Elektromotors. Die Statorwicklung ist über einen ersten Knoten mit einer statorseitigen ersten Halbbrücke umfassend ein erstes Halbleiterbauelement und ein zweites Halbleiterbauelement verbunden und ist über einen zweiten Knoten mit der Rotorwicklung verbunden. Die Rotorwicklung ist mit einem dritten Knoten verbunden, der über ein leitfähiges Bauelement mit der Anschlusseinheit verbunden ist. Die Ansteuerschaltung umfasst ein drittes Halbleiterbauelement, das über den zweiten Knoten mit der Rotorwicklung und der Statorwicklung verbunden ist und das über einen vierten Knoten direkt mit der Anschlusseinheit verbunden ist.

Mittels der Ansteuerschaltung der elektrischen Antriebseinheit können die jeweiligen Halbleiterbauelemente vorteilhaft derart angesteuert werden, dass bei einem Abbremsvorgang des Elektromotors der Rotor- und der Statorstrom des Elektromotors präzise und unabhängig voneinander eingestellt werden können.

Dadurch kann in vorteilhafter Weise der Rotorstrom auf ein vorbestimmtes Stromniveau begrenzt werden und es kann der Statorstrom unabhängig hiervon geregelt werden, so dass es möglich ist, den Elektromotor innerhalb einer vorgegebenen Zeitdauer, jedoch mit einem hohen Bremsmoment, kohlebürsten-schonend abzubremsen. Gleichzeitig kann aufgrund des begrenzten Rotorstroms und des regelbaren Statorstroms das Bürstenfeuer sowie die Erwärmung des Elektromotors reduziert werden. Dadurch kann der Kohlebürstenverschleiß des Elektromotors verringert werden. Dies führt zu verlängerten Wartungsintervallen des Elektromotors und damit zu einer erhöhten Betriebsdauer des Elektromotors der elektrischen Handwerkzeugmaschine.

Ein weiterer Vorteil der elektrischen Antriebseinheit ist, dass die Ansteuerschaltung der elektrischen Antriebseinheit eine geringe Anzahl an Halbleiterbauelementen aufweist, insbesondere im Vergleich mit herkömmlichen Antriebseinheiten. Infolgedessen kann der Fertigungsaufwand reduziert werden, während, aufgrund der geringen Anzahl an Halbleiterbauelementen, die Ausfallsicherheit der elektrischen Antriebseinheit erhöht wird.

Wenn das jeweilige Halbleiterbauelement in einen leitenden Zustand versetzt ist, kann ein Strom durch das Halbleiterbauelement fließen. Wenn das jeweilige Halbleiterbauelement in einen nicht-leitenden Zustand versetzt ist, kann kein Strom durch das Halbleiterbauelement fließen.

Der Elektromotor umfasst einen bürstenbehafteten Elektromotor, vorzugsweise einen Universalmotor oder einen Allstrommotor.

Der Elektromotor umfasst insbesondere einen Stator mit zumindest der Statorwicklung und einen Rotor mit zumindest der Rotorwicklung. Die Statorwicklung kann als eine Feldwicklung des Elektromotors bezeichnet werden, während die Rotorwicklung als eine Ankerwicklung des Elektromotors bezeichnet werden kann. Insbesondere weist die Statorwicklung einen ohmschen Widerstand und eine Induktivität auf, und die Rotorwicklung weist ebenfalls einen ohmschen Widerstand und eine Induktivität auf. Der jeweilige ohmsche Widerstand ist vorzugsweise möglichst klein. Wenn eine Spannung an die Statorwicklung oder an die Rotorwicklung angelegt wird, fließt ein Strom durch die jeweilige Wicklung. Aufgrund des Stroms und der Induktivität baut sich ein jeweiliges Magnetfeld auf. Je nach der Phasenbeziehung zwischen dem Stator und dem Rotor und der Richtung des Stromflusses (und damit der Richtung des Magnetfelds) und der jeweiligen Drehrichtung des Motors wird der Rotor angetrieben oder abgebremst. Da sich der Rotor in dem Magnetfeld des Stators bewegt, wird gemäß der Lenz'schen Regel in der Rotorwicklung eine Spannung induziert, in deren Folge ein Strom fließen kann, der der Ursache (Änderung des magnetischen Flusses) entgegenwirkt. Das heißt, der derart induzierte Strom bedingt seinerseits ein Magnetfeld, das dem Magnetfeld des Stators entgegengesetzt ist. Durch die Steuerung des Stromflusses in dem Stator und in dem Rotor kann daher zwischen einem Antreiben des Elektromotors und einem Abbremsen des Elektromotors umgeschaltet werden.

Gemäß einer Ausführungsform der elektrischen Antriebseinheit umfasst die Ansteuerschaltung ferner ein weiteres Halbleiterbauelement, das über den zweiten Knoten mit der Rotorwicklung und der Statorwicklung verbunden ist und über einen fünften Knoten direkt mit der Anschlusseinheit verbunden ist.

Der fünfte Knoten unterscheidet sich insbesondere von dem vierten Knoten. Beispielsweise ist der fünfte Knoten mit einer ersten Schiene der Anschlusseinheit verbunden, die mit einem ersten Pol der Energiequelle verbindbar ist, und der vierte Knoten ist mit einer zweiten Schiene der Anschlusseinheit verbunden, die mit einem zweiten Pol der Energiequelle verbindbar ist.

Vorzugsweise ist das zweite Halbleiterbauelement und/oder das weitere Halbleiterbauelement als ein passives Bauelement, wie eine Diode, ausgebildet. Dies vereinfacht den Aufbau der Ansteuerschaltung und senkt den Fertigungsaufwand im Vergleich zu einem aktiven Bauelement, wie einem Bipolartransistor oder einem MOSFET. Weiterhin kann das dritte Halbleiterbauelement als ein Thyristor ausgebildet sein. Dies senkt ebenfalls den Fertigungsaufwand.

Gemäß einer weiteren Ausführungsform der elektrischen Antriebseinheit ist die Ansteuerschaltung dazu eingerichtet, das erste Halbleiterbauelement in einen nicht-leitenden Zustand zu versetzen, um einen Speisestromfluss zu unterbrechen.

Insbesondere ist der Speisestromfluss ein Stromfluss, welcher von der Energiequelle erzeugt wird und über die Anschlusseinheit durch die elektrische Antriebseinheit fließen kann. Er fließt insbesondere von einem ersten Pol der Energiequelle zu dem jeweiligen Halbleiterbauelement und durch das jeweilige Halbleiterbauelement, wie beispielsweise das erste Halbleiterbauelement, in Richtung eines zweiten Pols der Energiequelle.

Vorzugsweise erfolgt das Unterbrechen des Speisestromflusses in dieser Ausführungsform nicht im Rahmen einer Ansteuerung des ersten Halbleiterbauelements mit einem PWM-Signal, wie es beispielsweise in dem Motorbetrieb verwendet wird. Der Zeitraum des Unterbrechens des Speisestromflusses ist insbesondere um ein Vielfaches größer als eine Periodendauer des PWM-Signals.

Die Periodendauer des PWM-Signals umfasst zumindest einen Impuls (High-Pegel) und einen Null-Impuls (Low-Pegel). Der Tastgrad gibt vorzugsweise das Verhältnis der Impulsdauer oder des Impulses des PWM-Signals zu der Periodendauer des PWM-Signals an. Beispielsweise beträgt die Impulsdauer (High-Pegel) bei einem Tastgrad von 0,550% der Periodendauer. Die restlichen 50% der Periodendauer umfassen den Null-Impuls (Low-Pegel). Das heißt, dass bei einem PWM-Signal, welches einen Tastgrad von 0,5 aufweist und eine Periodendauer von 100 $\mu$s umfasst, das PWM-Signal für einen Zeitraum von 50 $\mu$s einen Impuls oder einen High-Pegel ausgibt, und für einen Zeitraum von 50 $\mu$s einen Null-Impuls oder einen Low-Pegel ausgibt.

Ein Steueranschluss des jeweiligen Halbleiterbauelements, wie beispielsweise des ersten Halbleiterbauelements, wird insbesondere mittels des High-Pegels des PWM-Signals oder des Low-Pegels des PWM-Signals angesteuert. Falls beispielsweise das jeweilige Halbleiterbauelement ein Bipolartransistor ist, ist der Steueranschluss als ein Basis-Anschluss ausgebildet. Alternativ, falls das jeweilige Halbleiterbauelement als ein MOSFET oder ein IGBT ausgebildet ist, ist der Steueranschluss als ein Gate-Anschluss ausgebildet.

Wenn insbesondere an dem Steueranschluss des jeweiligen Halbleiterbauelements ein High-Pegel anliegt, wird das jeweilige Halbleiterbauelement in einen leitenden Zustand versetzt. Falls andererseits ein Low-Pegel an dem Steueranschluss des jeweiligen Halbleiterbauelements anliegt, wird das jeweilige Halbleiterbauelement in einen nicht-leitenden Zustand versetzt. Es sei angemerkt, dass auch eine umgekehrte Logik verwendet werden kann, bei der die Rolle von High-Pegel und Low-Pegel vertauscht sind.

Durch das Versetzen des ersten Halbleiterbauelements in den nicht-leitenden Zustand wird der Elektromotor vorzugsweise von einem Motorbetrieb in einen Bremsbetrieb umgeschaltet. Zeitlich vor der Unterbrechung des Speisestromflusses wird der Elektromotor insbesondere in dem Motorbetrieb betrieben. Während des Motorbetriebs wird vorzugsweise ein Arbeitsvorgang, wie ein Bohren in einen Untergrund oder ein Stemmvorgang, von einem Bediener der elektrischen Handwerkzeugmaschine durchgeführt. Im Bremsbetrieb wird insbesondere der Elektromotor, und damit auch ein von diesem angetriebenes Werkzeug, zum Stillstand gebracht. Unter dem Begriff "Bremsbetrieb" ist im Rahmen dieser Patentanmeldung zu verstehen, dass der Elektromotor sich nicht in einem Motorbetrieb befindet. Der Bremsbetrieb kann auch Zeitintervalle umfassen, in denen der Elektromotor nicht mit einem Bremsmoment gebremst wird, und kann Zeitintervalle umfassen, in denen ein Stromfluss durch den Elektromotor eine antreibende Wirkung hat. Dies kann insbesondere direkt nach dem Umschalten von dem Motorbetrieb in den Bremsbetrieb für ein kurzes Zeitintervall der Fall sein.

Ein Vorteil der elektrischen Antriebseinheit ist, dass die Ansteuerschaltung dazu eingerichtet ist, die jeweiligen Halbleiterbauelemente zu jedem beliebigen Zeitpunkt im Motorbetrieb und/oder im Bremsbetrieb in einen leitenden Zustand oder in einen nicht-leitenden Zustand zu versetzen. Somit kann im Motorbetrieb bei einem Verkeilen des Bohrwerkzeugs unmittelbar der Bremsbetrieb eingeleitet werden. Dies erhöht die Sicherheit für einen Bediener der elektrischen Handwerkzeugmaschine.

Vorzugsweise ist die Ansteuerschaltung insbesondere dazu eingerichtet, einen vorbestimmten Betriebszustands der elektrischen Handwerkzeugmaschine während des Motorbetriebs des Elektromotors zu erfassen. Vorzugsweise umfasst der vorbestimmte Betriebszustand zumindest einen Betriebsunterbrechungszustand, insbesondere das Verkeilen eines Bohrwerkzeugs der elektrischen Handwerkzeugmaschine. Wenn sich beispielsweise während eines Bohrvorgangs mit der elektrischen Handwerkzeugmaschine das Bohrwerkzeug in einem Untergrund, wie einer Armierung in einem Stahlbetonblock, verkeilt, wird dies als Betriebsunterbrechungszustand erfasst. Das Vorliegen des vorbestimmten Betriebszustands wird beispielsweise mittels eines Sensors, insbesondere mittels eines Gyrosensors, der elektrischen Handwerkzeugmaschine erfasst.

Gemäß einer weiteren Ausführungsform der elektrischen Antriebseinheit ist die Ansteuerschaltung dazu eingerichtet, das dritte Halbleiterbauelement in einen leitenden Zustand zu versetzen, um die Rotorwicklung parallel zu der Statorwicklung zu schalten.

Gemäß einer weiteren Ausführungsform der elektrischen Antriebseinheit ist die Ansteuerschaltung dazu eingerichtet, zusätzlich zu dem dritten Halbleiterbauelement das erste Halbleiterbauelement in einen leitenden Zustand zu versetzen, um einen magnetischen Fluss bereitzustellen, so dass an der Rotorwicklung eine Spannung induziert wird, die im Vergleich zu einer im Motorbetrieb des Elektromotors an der Rotorwicklung anliegenden Spannung entgegengesetzte Richtung aufweist.

Insbesondere wird der magnetische Fluss durch den Strom durch die Statorwicklung erzeugt. Der magnetische Fluss wird insbesondere derart bereitgestellt, dass der sich drehende Rotor in dem magnetischen Fluss bewegt. Der magnetische Fluss kann auch als magnetisches Feld der Statorwicklung bezeichnet werden, welches durch den Fluss des Statorstroms durch die Statorwicklung hervorgerufen wird.

Die an der Rotorwicklung induzierte Spannung wird insbesondere durch einen gemäß der Lenz'schen Regel induzierten Strom in der Rotorwicklung hervorgerufen. Da dieser Stromfluss derart gerichtet ist, dass das durch diesen hervorgerufene Magnetfeld seiner Ursache entgegen wirkt, entsteht ein Bremsmoment, das der Drehung des Rotors entgegenwirkt. Somit wird der Elektromotor, insbesondere dessen Rotor, abgebremst.

Die Ansteuerschaltung ist insbesondere dazu eingerichtet, das erste und das dritte Halbleiterbauelement in einen leitenden Zustand zu versetzen, sobald der Rotorstrom einen vorbestimmten Schaltschwellwert erreicht oder unterschreitet. Vorzugsweise ist der vorbestimmte Schaltschwellwert 0 A. Wenn der Rotorstrom insbesondere den vorbestimmten Schaltschwellwert erreicht hat, ist der Rotorstrom vollständig abgeklungen, er beträgt somit vorzugsweise 0 A.

Gemäß einer weiteren Ausführungsform der elektrischen Antriebseinheit umfasst die elektrische Antriebseinheit eine erste Strommesseinheit zum Bestimmen eines aktuellen Rotorstroms, wobei die Ansteuerschaltung dazu eingerichtet ist, das erste Halbleiterbauelement in Abhängigkeit des bestimmten aktuellen Rotorstroms und eines vorbestimmten Schwellwerts des Rotorstroms in einen nicht-leitenden Zustand zu versetzen, um den Rotorstrom zu begrenzen.

Der Rotorstrom wird vorzugsweise derart in Abhängigkeit des vorbestimmten Schwellwerts begrenzt, dass der Betrag des Rotorstroms kleiner oder gleich dem vorbestimmten Schwellwert ist, also den vorbestimmten Schwellwert nicht überschreitet.

Gemäß einer weiteren Ausführungsform der elektrischen Antriebseinheit umfasst das leitfähige Bauelement ein viertes Halbleiterbauelement und die Ansteuerschaltung umfasst ferner ein fünftes Halbleiterbauelement, das über den dritten Knoten mit der Rotorwicklung verbunden ist und das über einen fünften Knoten direkt mit der Anschlusseinheit verbunden ist.

Der fünfte Knoten unterscheidet sich insbesondere von dem vierten Knoten. Beispielsweise ist der fünfte Knoten mit einer ersten Schiene der Anschlusseinheit verbunden, die mit einem ersten Pol der Energiequelle verbindbar ist, und der vierte Knoten ist mit einer zweiten Schiene der Anschlusseinheit verbunden, die mit einem zweiten Pol der Energiequelle verbindbar ist.

Gemäß einer Ausführungsform der elektrischen Antriebseinheit ist das erste, zweite, dritte, vierte und/oder fünfte Halbleiterbauelement als ein Bipolartransistor, insbesondere als ein IGBT, oder als ein MOSFET ausgebildet.

Ein IGBT ist ein Bipolartransistor mit einer isolierten Gate-Elektrode. Insbesondere ist eine Schutzdiode (Freilaufdiode) parallel zu dem jeweiligen Halbleiterbauelement in Sperrrichtung zu dem Speisestrom der Energiequelle angeordnet. Vorzugsweise dienen Freilaufdioden zum Schutz vor einer Überspannung beim Abschalten einer induktiven Gleichspannungslast, wie zum Beispiel einem Elektromotor. Wenn das jeweilige Halbleiterbauelement als ein Bipolartransistor ausgebildet ist, ist die Freilaufdiode parallel zu dem Kollektor-Anschluss und dem Emitter-Anschluss des Bipolartransistors geschaltet. Wenn andererseits das jeweilige Halbleiterbauelement als ein MOSFET ausgebildet ist, ist die Freilaufdiode parallel zu dem Drain-Anschluss und dem Source-Anschluss des MOSFET geschaltet. Beispielsweise kann ein jeweiliger Rotor- oder Statorstrom über eine jeweilige Freilaufdioden abklingen.

Gemäß einer weiteren Ausführungsform der elektrischen Antriebseinheit ist die Ansteuerschaltung dazu eingerichtet, das vierte Halbleiterbauelement in einen nicht-leitenden Zustand zu versetzen, um einen Rotorstrom durch die Rotorwicklung zu unterbrechen.

Ein Vorteil der elektrische Antriebseinheit ist, dass die Ansteuerschaltung dazu eingerichtet ist, die jeweiligen Halbleiterbauelemente zu jedem beliebigen Zeitpunkt im Motorbetrieb und/oder im Bremsbetrieb in einen leitenden Zustand oder in einen nicht-leitenden Zustand zu versetzen. Somit kann im Motorbetrieb bei einem Verkeilen des Bohrwerkzeugs unmittelbar der Bremsbetrieb eingeleitet werden. Dies erhöht die Sicherheit für einen Bediener der elektrischen Handwerkzeugmaschine.

Gemäß einer weiteren Ausführungsform der elektrischen Antriebseinheit ist die Ansteuerschaltung dazu eingerichtet, das dritte und das fünfte Halbleiterbauelement in einen leitenden Zustand zum Umpolen einer an der Rotorwicklung anliegenden Eingangsspannung im Vergleich zum Motorbetrieb zu versetzen.

Die Ansteuerschaltung ist vorzugsweise dazu eingerichtet, die Rotorwicklung zeitlich vor dem Umpolen parallel zu der Statorwicklung zu schalten, indem das dritte Halbleiterbauelement in eine leitenden Zustand versetzt wird. Insbesondere sind zeitlich vor dem Parallelschalten die Stator- und die Rotorwicklung des Elektromotors wie bei einer Reihenschlussmaschine verschaltet, wohingegen zeitlich nach dem Parallelschalten die Stator- und die Rotorwicklung des Elektromotors wie bei einer Nebenschlussmaschine verschaltet sind.

Das Umpolen der Eingangsspannung an der Rotorwicklung $U_{in}$ wird insbesondere nachfolgend erläutert. Für den Rotorstrom durch die Rotorwicklung $i_{Armature}$ gilt beispielsweise näherungsweise die nachfolgende Gleichung (1):

$$i_{Armature} = \frac{1}{L_{Armature}} \int u_{L_{Armature}} \cdot dt, \qquad \text{Gleichung (1)}$$

wobei $L_{Armature}$ die Induktivität der Rotorwicklung und $u_{L_{Armature}}$ die Rotorspannung an der Rotorwicklung darstellen.

Im Motorbetrieb vor dem Umpolen gilt für die Rotorspannung $u_{L_{Armature}}$ die Gleichung (2):

$$u_{L_{Armature}} = U_{in} - U_{R_{Armature}} - U_{IND}, \qquad \text{Gleichung (2)}$$

**wobei** $U_{in}$ die Eingangsspannung an der Rotorwicklung, $U_{RArmature}$ eine am ohmschen Widerstand des Rotors abfallende Spannung und $U_{IND}$ eine an der Rotorwicklung induzierte Spannung ist, welche durch die Gleichung (3) darstellbar ist:

$$U_{IND} = c_A \cdot \Psi_E \cdot \omega, \qquad \text{Gleichung (3)}$$

wobei $c_A$ eine Maschinenkonstante, $\psi_E$ der durch den Statorstrom durch die Statorwicklung erzeugte magnetische Erregerfluss und $\omega$ die aktuelle Drehzahl des Rotors darstellen.

Durch das Umpolen der Eingangsspannung an der Rotorwicklung $U_{in}$ weist diese das gleiche Vorzeichen wie die induzierte Spannung $U_{IND}$ auf, weshalb die Spannungen nunmehr alle betragsmäßig addiert werden. Im Bremsbetrieb nach dem Umpolen gilt somit für die Rotorspannung $u_{L_{Armature}}$ die Gleichung (4):

$$u_{L_{Armature}} = -U_{in} - U_{R_{Armature}} - U_{IND}. \qquad \text{Gleichung (4)}$$

Infolgedessen wird ein dem Statorstrom durch die Statorwicklung entgegengerichteter Strom in der Rotorwicklung generiert. Damit wird durch den Rotorstrom ein Magnetfeld erzeugt, das so mit dem von der Statorwicklung erzeugten Magnetfeld wechselwirkt, dass sich ein Bremsmoment ergibt. Somit wird der Rotor abgebremst.

Gemäß einer weiteren Ausführungsform der elektrischen Antriebseinheit umfasst die elektrische Antriebseinheit eine erste Strommesseinheit zum Bestimmen eines aktuellen Rotorstroms, wobei die Ansteuerschaltung dazu eingerichtet ist, das vierte Halbleiterbauelement und das fünfte Halbleiterbauelement in Abhängigkeit des bestimmten aktuellen Rotorstroms und eines vorbestimmten Schwellwerts des Rotorstroms abwechselnd gegengleich in einen leitenden Zustand und in einen nicht-leitenden Zustand zu versetzen, um den Rotorstrom zu begrenzen.

Der Rotorstrom wird vorzugsweise derart in Abhängigkeit des vorbestimmten Schwellwerts begrenzt, dass der Rotorstrom den vorbestimmten Schwellwert nicht überschreitet.

Der Ausdruck "abwechselnd gegengleich" bedeutet insbesondere, dass zwei Halbleiterbauelemente, wie das vierte und das fünfte Halbleiterbauelement, derart abwechselnd geschaltet werden, dass beispielsweise das vierte Halbleiterbauelement in einem leitenden Zustand ist, während gleichzeitig das fünfte Halbleiterbauelement in einem nicht-leitenden Zustand ist, oder auch umgekehrt.

Gemäß einer weiteren Ausführungsform der elektrischen Antriebseinheit ist die Ansteuerschaltung dazu eingerichtet, das vierte Halbleiterbauelement und das fünfte Halbleiterbauelement in Abhängigkeit des bestimmten aktuellen Rotorstroms, des vorbestimmten Schwellwerts des Rotorstroms und einer aktuellen Drehzahl des Elektromotors abwechselnd gegengleich in einen leitenden Zustand und in einen nicht-leitenden Zustand zu versetzen, um den Rotorstrom zu begrenzen.

Hierbei wird ebenfalls der Rotorstrom vorzugsweise derart in Abhängigkeit des vorbestimmten Schwellwerts begrenzt, dass der Rotorstrom den vorbestimmten Schwellwert nicht überschreitet.

Gemäß einer weiteren Ausführungsform der elektrischen Antriebseinheit umfasst die elektrische Antriebseinheit eine zweite Strommesseinheit zum Bestimmen eines aktuellen Statorstroms, wobei die Ansteuerschaltung dazu eingerichtet ist, das erste Halbleiterbauelement abwechselnd in einen leitenden Zustand und in einen nicht-leitenden Zustand zu versetzen, um einen Statorstrom durch die Statorwicklung in Abhängigkeit einer aktuellen Drehzahl des Elektromotors zu regeln.

Dabei ist die Ansteuerschaltung vorzugsweise dazu eingerichtet, den Statorstrom mit einem Absinken der aktuellen Drehzahl zu erhöhen. Durch eine Erhöhung des Statorstroms kann das Bremsmoment erhöht werden.

Gemäß einer weiteren Ausführungsform der elektrischen Antriebseinheit ist die Ansteuerschaltung dazu eingerichtet, nach Ablauf eines vorbestimmten Zeitraums, nachdem das dritte und das fünfte Halbleiterbauelement in einen leitenden Zustand versetzt wurden, das erste Halbleiterbauelement abwechselnd in einen leitenden Zustand und in einen nicht-leitenden Zustand zu versetzen, um einen Statorstrom durch die Statorwicklung in Abhängigkeit einer aktuellen Drehzahl des Elektromotors zu regeln.

Insbesondere wird nach dem Umpolen auf den Ablauf des vorbestimmten Zeitraums gewartet. Der vorbestimmte Zeitraum beträgt unter 5 ms, bevorzugt unter 4 ms, bevorzugt unter 3 ms, bevorzugt unter 2 ms. Sobald der vorbestimmte Zeitraum abgelaufen ist, wird vorzugsweise die Statorwicklung in Abhängigkeit des Zustands des ersten Halbleiterbauelements bestromt und der Statorstrom kann erhöht werden. Somit kann der Statorstrom unabhängig von dem Rotorstrom geregelt werden. Diese Maßnahme reduziert in vorteilhafter Weise das Bürstenfeuer, wodurch der Kohlebürstenverschleiß verringert wird.

Gemäß einer weiteren Ausführungsform ist die elektrische Antriebseinheit zum Betrieb an einer Gleichspannungsquelle, einer pulsierenden Gleichspannungsquelle oder einer Wechselspannungsquelle mit einem Gleichrichter eingerichtet.

Vorzugsweise ist die Energiequelle eine Wechselspannungsquelle mit einem Gleichrichter, wobei zusätzlich ein Glättungskondensator vorgesehen sein kann.

Gemäß einer weiteren Ausführungsform der elektrischen Antriebseinheit umfasst die Ansteuerschaltung mehrere Treiberschaltungen, wobei jedem Halbleiterbauelement eine Treiberschaltung zum Ausgeben eines jeweiligen Steuersignals zum Ansteuern des jeweiligen Halbleiterbauelements zugeordnet ist.

Durch diese Ansteuerung der Halbleiterbauelemente durch die Ansteuerschaltung mittels der jeweiligen Treiberschaltung ist es möglich, dass bei einem Abbremsvorgang des Elektromotors der Rotor- und der Statorstrom des Elektromotors präzise und unabhängig voneinander eingestellt werden können. Das jeweilige Steuersignal ist insbesondere ein PWM (Pulsweitenmodulation)-Signal.

Gemäß einem zweiten Aspekt wird eine elektrische Handwerkzeugmaschine mit einer elektrischen Antriebseinheit gemäß dem ersten Aspekt vorgeschlagen.

Die elektrische Handwerkzeugmaschine ist beispielsweise als eine Bohrmaschine, ein Bohrhammer, eine Säge, ein Rührgerät, ein Schleifgerät, ein Trennschleifer oder dergleichen ausgebildet. Die elektrische Handwerkzeugmaschine ist insbesondere kabelgebunden betreibbar. Alternativ kann die elektrische Handwerkzeugmaschine eine Aufnahmebucht zum Aufnehmen eines Akkumulators aufweisen, welcher diese mit Energie versorgt.

KURZE BESCHREIBUNG DER FIGUREN

Die nachfolgende Beschreibung erläutert die Erfindung anhand von exemplarischen Ausführungsformen und Figuren. In den Figuren zeigt:

Fig. 1        eine schematische Ansicht einer elektrischen Handwerkzeugmaschine;

Fig. 2A       eine schematische Ansicht einer ersten Ausführungsform einer Schaltungstopologie einer elektrischen Antriebseinheit;

Fig. 2B     ein schematisches Stromflussdiagramm im Motorbetrieb eines Elektromotors innerhalb der Schaltungstopologie der elektrischen Antriebseinheit gemäß Fig. 2A;

Fig. 2C     ein schematisches Stromflussdiagramm im Bremsbetrieb eines Elektromotors innerhalb der Schaltungstopologie der elektrischen Antriebseinheit gemäß Fig. 2A;

Fig. 3A     eine schematische Ansicht einer zweiten Ausführungsform einer Schaltungstopologie einer elektrischen Antriebseinheit;

Fig. 3B     ein schematisches Stromflussdiagramm im Motorbetrieb eines Elektromotors innerhalb der Schaltungstopologie der elektrischen Antriebseinheit gemäß Fig. 3A;

Fig. 3C     ein schematisches Stromflussdiagramm im Bremsbetrieb eines Elektromotors innerhalb der Schaltungstopologie der elektrischen Antriebseinheit gemäß Fig. 3A;

Fig. 4     eine schematische Ansicht einer dritten Ausführungsform einer Schaltungstopologie einer elektrischen Antriebseinheit;

Fig. 5     eine schematische Ansicht einer vierten Ausführungsform einer Schaltungstopologie einer elektrischen Antriebseinheit; und

Fig. 6     ein schematisches Diagramm eines Ablaufs eines Steuerverfahrens zum Abbremsen eines Elektromotors.

Gleiche oder funktionsgleiche Elemente werden durch gleiche Bezugszeichen in den Figuren indiziert, soweit nicht anders angegeben.

AUSFÜHRUNGSFORMEN DER ERFINDUNG

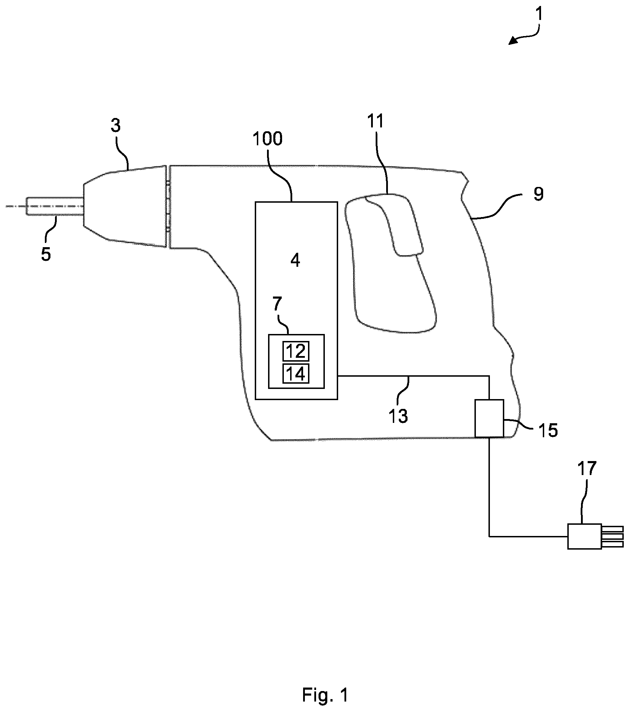

Fig. 1 zeigt eine schematische Ansicht einer elektrische Handwerkzeugmaschine 1, die beispielhaft als eine Bohrmaschine ausgebildet ist. Die Bohrmaschine 1 hat eine Werkzeugaufnahme 3, in welcher als ein Bohrwerkzeug 5 ein Bohrer eingesetzt ist. Ein primärer Antrieb der Bohrmaschine 1 ist ein Elektromotor 7 mit einer Statorwicklung 12 und einer Rotorwicklung 14. Ein Bediener kann die Bohrmaschine 1 mittels eines Handgriffs 9 führen und mittels eines Tasters 11 in Betrieb nehmen. Im Betrieb dreht die Bohrmaschine 1 den Bohrer 5 kontinuierlich um eine Arbeitsachse und kann dabei den Bohrer 5 längs der Arbeitsachse in einen Untergrund hineinbohren.

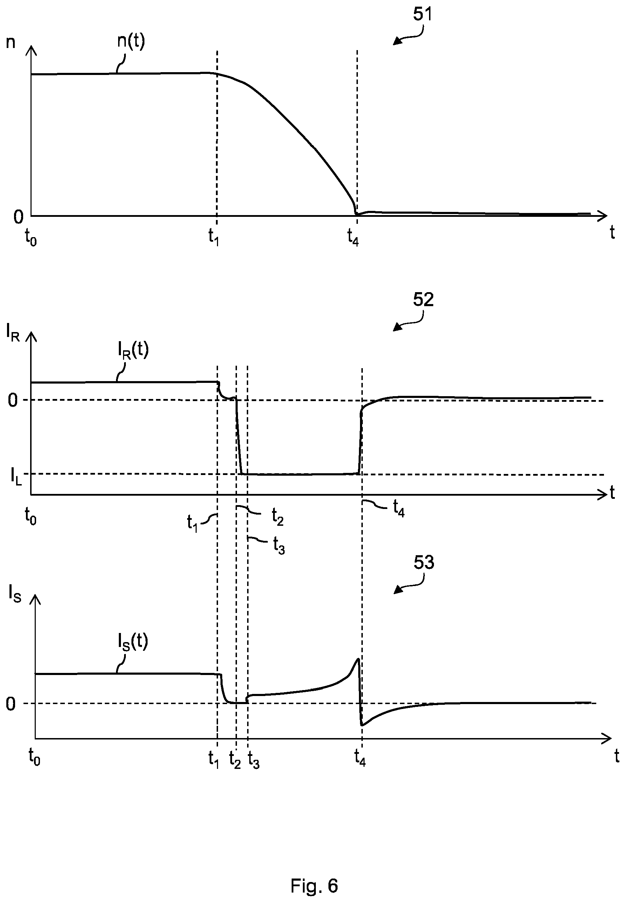

Die Bohrmaschine 1 weist in Fig. 1 eine elektrische Antriebseinheit 100 auf. Die elektrische Antriebseinheit 100 umfasst den Elektromotor 7 und eine Ansteuerschaltung 4 zum Ansteuern des Elektromotors 7. Die elektrische Antriebseinheit 100 ist über eine elektrische Leitungsanordnung 13 mit einem Anschlussterminal 15 gekoppelt, welches mittels eines Steckers 17 mit einem Stromnetz (nicht gezeigt) gekoppelt werden kann. Alternativ kann die Bohrmaschine 1 auch über einen Akkumulator (nicht gezeigt) mit Strom versorgt werden. Der Antriebsstrang beinhaltet beispielsweise eine Antriebswelle und ein Getriebe zwischen dem Elektromotor 7 und der Antriebswelle. Das Getriebe kann beispielsweise eine Drehzahl n(t) (siehe Fig. 6) des Elektromotors 7 auf eine gewünschte Drehzahl des Bohrers 5 anpassen.

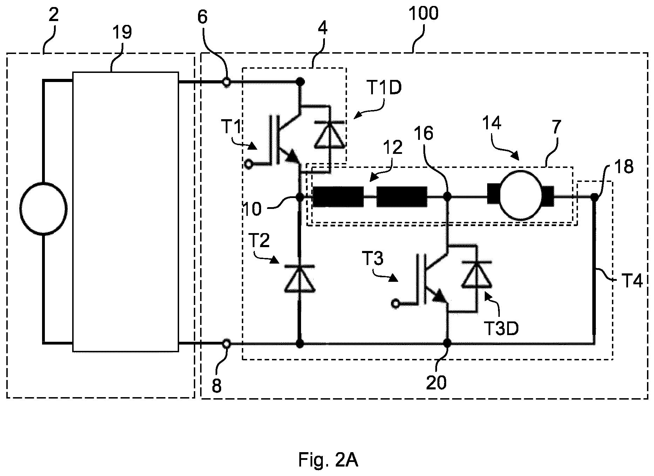

Fig. 2A zeigt eine schematische Ansicht einer ersten Ausführungsform einer Schaltungstopologie einer elektrischen Antriebseinheit 100, die beispielsweise in der elektrischen Handwerkzeugmaschine 1 gemäß Fig. 1 verwendet werden kann.

Die elektrische Antriebseinheit 100 der Fig. 2A weist einen Elektromotor 7 auf, welcher eine Statorwicklung 12 und eine Rotorwicklung 14 umfasst. Die elektrische Antriebseinheit 100 weist ferner eine Ansteuerschaltung 4 zum Ansteuern des Elektromotors 7 auf. Weiterhin weist die elektrische Antriebseinheit 100 eine Anschlusseinheit 6, 8 zum Koppeln einer Energiequelle 2 zum Antreiben des Elektromotors 7 auf. Die Energiequelle 2 ist in der Fig. 2A beispielhaft als eine Wechselspannungsquelle mit einem Gleichrichter 19 ausgebildet. Ebenso ist es insbesondere möglich, dass die Energiequelle 2 als eine Gleichspannungsquelle oder als eine pulsierende Gleichspannungsquelle ausgebildet ist.

Weiter ist in der Fig. 2A die Statorwicklung 12 über einen ersten Knoten 10 mit einer statorseitigen ersten Halbbrücke, die ein erstes Halbleiterbauelement T1 und ein zweites Halbleiterbauelement T2 umfasst, verbunden. Zusätzlich ist die Statorwicklung 12 über einen zweiten Knoten 16 mit der Rotorwicklung 14 verbunden. Die Rotorwicklung 14 ist mit einem dritten Knoten 18 verbunden, der über ein leitfähiges Bauelement T4 mit einem zweiten Anschluss 8 der Anschlusseinheit 6, 8 verbunden ist. Die Energiequelle 2 weist insbesondere einen ersten Pol, vorzugsweise einen positiven Pol auf, welcher mit einem ersten Anschluss 6 der Anschlusseinheit 6, 8 verbunden ist. Ferner umfasst die Energiequelle 2 einen zweiten Pol, insbesondere einen negativen Pol, der mit dem zweiten Anschluss 8 der Anschlusseinheit 6, 8 verbunden ist. Die Ansteuerschaltung 4 umfasst ein drittes Halbleiterbauelement T3, welches über den zweiten Knoten 16 mit der Rotorwicklung 14 und der Statorwicklung 12 verbunden ist und welches über einen vierten Knoten 20 direkt mit dem zweiten Anschluss 8 der Anschlusseinheit 6, 8 verbunden ist. Zusätzlich weisen das erste und das dritte Halbleiterbauelement T1, T3 eine jeweilige parallelgeschaltete Freilaufdiode T1D, T3D auf. In Fig. 2A ist das zweite Halbleiterbauelement T2 als eine Diode ausgebildet. Ein Anoden-Anschluss der Diode ist mit dem zweiten Anschluss 8 der Anschlusseinheit 6, 8 verbunden. Die Diode ist somit insbesondere in Sperrrichtung zu einem Speisestrom der Energiequelle 2 angeordnet. Ferner sind in Fig. 2A das erste und das dritte Halbleiterbauelement T1, T3 jeweils beispielhaft als ein IGBT ausgebildet.

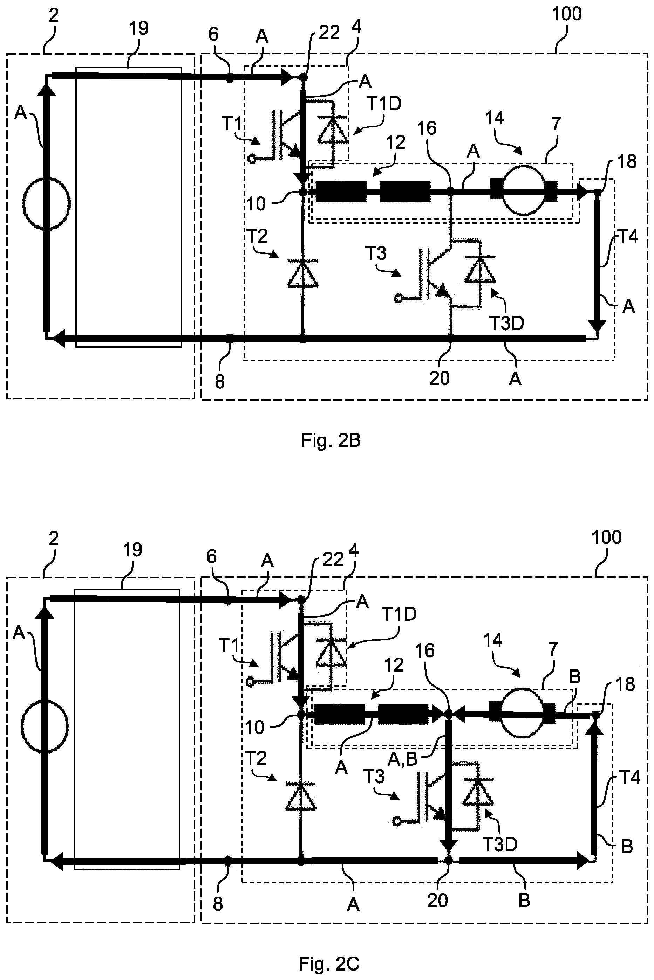

Fig. 2B zeigt ein schematisches Stromflussdiagramm eines Speisestroms, der in der Energiequelle 2 generiert wird, im Motorbetrieb eines Elektromotors 7 innerhalb der Schaltungstopologie der elektrischen Antriebseinheit 100 gemäß Fig. 2A. Im Motorbetrieb (Antriebsfall) ist das leitfähige Bauelement T4 dauerhaft in einem leitenden Zustand und das dritte Halbleiterbauelement T3 ist dauerhaft in einem nicht-leitenden Zustand, so dass die Statorwicklung 12 in Reihe zu der Rotorwicklung 14 geschaltet ist. Der Elektromotor 7 wird hier als eine Reihenschlussmaschine betrieben. Die Regelung der Höhe des Speisestroms durch die Stator- und Rotorwicklung 12, 14 und somit auch der aktuellen Drehzahl n(t) (siehe Fig. 6) des Elektromotors 7 erfolgt insbesondere anhand eines Versetzen des ersten Halbleiterbauelements T1 abwechselnd in einen leitenden Zustand und in einen nicht-leitenden Zustand.

In Fig. 2B fließt der Speisestrom im Antriebsfall des Elektromotors 7, wie in Fig. 2B durch die Pfeile A dargestellt, von der Energiequelle 2 über einen ersten Anschluss 6 der Anschlusseinheit 6, 8 und über einen fünften Knoten 22 durch das erste Halbleiterbauelement T1, von dem ersten Halbleiterbauelement T1 über einen ersten Knoten 10 durch die Statorwicklung 12, von der Statorwicklung 12 über einen zweiten Knoten 16 durch die Rotorwicklung 14 zu einem dritten Knoten 18, von dem dritten Knoten 18 durch das leitfähige Bauelement T4 über einen vierten Knoten 20 und über einen zweiten Anschluss 8 der Anschlusseinheit 6, 8 zurück zu der Energiequelle 2.

Fig. 2C zeigt ein schematisches Stromflussdiagramm im Bremsbetrieb eines Elektromotors 7 innerhalb der Schaltungstopologie der elektrischen Antriebseinheit 100 gemäß Fig. 2A. In dem Bremsbetrieb werden die jeweiligen Halbleiterbauelemente wie folgt angesteuert:

In einem ersten Schritt wird das erste Halbleiterbauelement T1 in einen nicht-leitenden Zustand zum Schalten des Elektromotors 7 von einem Motorbetrieb in einen Bremsbetrieb versetzt. Durch das Versetzen des ersten Halbleiterbauelements T1 in einen nicht-leitenden Zustand wird der Speisestromfluss unterbrochen. In einem zweiten Schritt wird das dritte Halbleiterbauelement T3 in einen leitenden Zustand versetzt, um die Rotorwicklung 14 parallel zu der Statorwicklung 12 zu schalten. In einem dritten Schritt wird das erste Halbleiterbauelement T1 in einen leitenden Zustand versetzt, um einen magnetischen Fluss bereitzustellen, so dass an der Rotorwicklung 14 eine Spannung induziert wird, die im Vergleich zu einer im Motorbetrieb des Elektromotors 7 an der Rotorwicklung 14 anliegenden Spannung entgegengesetzte Richtung aufweist. In einem vierten Schritt wird das erste Halbleiterbauelement T1 in einen nicht-leitenden Zustand in Abhängigkeit eines vorbestimmten Schwellwerts $I_L$ (siehe Fig. 6) für einen Rotorstrom $I_R(t)$ (siehe Fig. 6) durch die Rotorwicklung 14 versetzt, um den Rotorstrom $I_R(t)$ zu begrenzen. Der Rotorstrom $I_R(t)$ wird vorzugsweise auf einen vorbestimmten Schwellwert begrenzt. Beispielsweise ist hierzu eine Strommesseinheit (nicht dargestellt) vorgesehen, die zum Überwachen des Rotorstroms $I_R(t)$ eingerichtet ist. In einem fünften Schritt wird das erste Halbleiterbauelement T1 abwechselnd in einen leitenden Zustand und in einen nicht-leitenden Zustand versetzt, um einen Statorstrom $I_S(t)$ (siehe Fig. 6) durch die Statorwicklung 12 in Abhängigkeit einer aktuellen Drehzahl n(t) (siehe Fig. 6) des Elektromotors 7 zu regeln. Der Statorstrom $I_S(t)$ wird vorzugsweise auf einen drehzahlabhängigen Wert geregelt. Beispielsweise ist hierzu eine weitere Strommesseinheit (nicht dargestellt) vorgesehen, die zum Überwachen des Statorstroms $I_R(t)$ eingerichtet ist. Wenn die Drehzahl n(t) des Elektromotors 7 einen vorbestimmten Schwellwert erreicht hat, wird der Elektromotor 7 vorzugsweise komplett von der Energiequelle 2 getrennt. Der Bremsvorgang ist damit abgeschlossen.

Im Bremsbetrieb befindet sich insbesondere das dritte Halbleiterbauelement T3 dauerhaft in einem leitenden Zustand. Infolgedessen sind die Stator- und die Rotorwicklung 12, 14 nicht mehr in Reihe geschaltet. Der Elektromotor 7 wird deshalb als eine Nebenschlussmaschine und nicht mehr als eine Reihenschlussmaschine (siehe Fig. 2B) betrieben. Die insbesondere im Bremsbetrieb an der Rotorwicklung 14 induzierte Spannung wird vorzugsweise durch einen gemäß der Lenz'schen Regel induzierten Rotorstrom $I_R(t)$ in der Rotorwicklung 14 hervorgerufen. Da dieser Stromfluss derart gerichtet ist, dass das durch diesen hervorgerufene Magnetfeld seiner Ursache entgegen wirkt, entsteht ein Bremsmoment, das der Drehung des Rotors entgegenwirkt. Somit wird der Elektromotor 7 abgebremst.

Im Bremsbetrieb fließt ein Speisestrom, wie durch die Pfeile A in Fig. 2C dargestellt ist, von der Energiequelle 2 über einen ersten Anschluss 6 der Anschlusseinheit 6, 8 und über einen fünften Knoten 22 durch das erste Halbleiterbauelement T1, von dem ersten Halbleiterbauelement T1 über einen ersten Knoten 10 durch die Statorwicklung 12, von der Statorwicklung 12 über einen zweiten Knoten 16 durch das dritte Halbleiterbauelement T3, von dem dritten Halbleiterbauelement T3 über einen vierten Knoten 20 und über einen zweiten Anschluss 8 der Anschlusseinheit 6, 8 zurück zu der Energiequelle 2. Gleichzeitig fließt in der Rotorwicklung 14 ein induzierter Strom, der durch die Pfeile B in Fig. 2C dargestellt ist. Der induzierte Strom weist eine dem Speisestrom entgegengesetzte Richtung auf. Dieser entgegengerichtete Strom fließt von dem zweiten Knoten 16 durch das dritte Halbleiterbauelement T3 zu einem vierten Knoten 20, von dem vierten Knoten 20 über das leitfähige Bauelement T4 zu einem dritten Knoten 18 und von dem dritten Knoten 18 durch die Rotorwicklung 14 zurück zu dem zweiten Knoten 16.

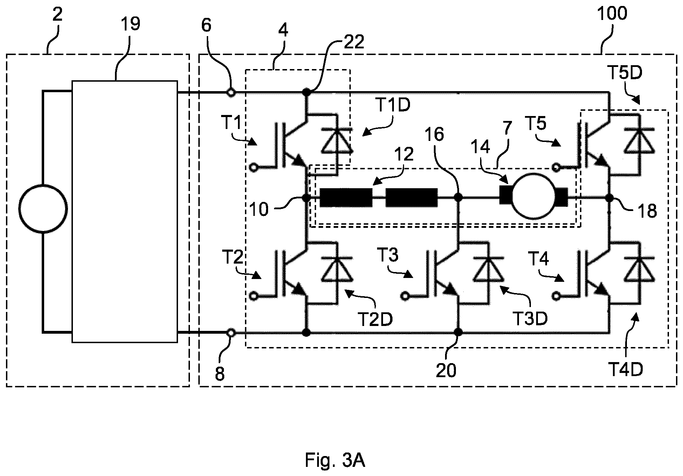

Fig. 3A zeigt eine schematische Ansicht einer zweiten Ausführungsform einer Schaltungstopologie einer elektrischen Antriebseinheit 100, die beispielsweise in der elektrischen Handwerkzeugmaschine 1 gemäß Fig. 1 verwendet werden kann.

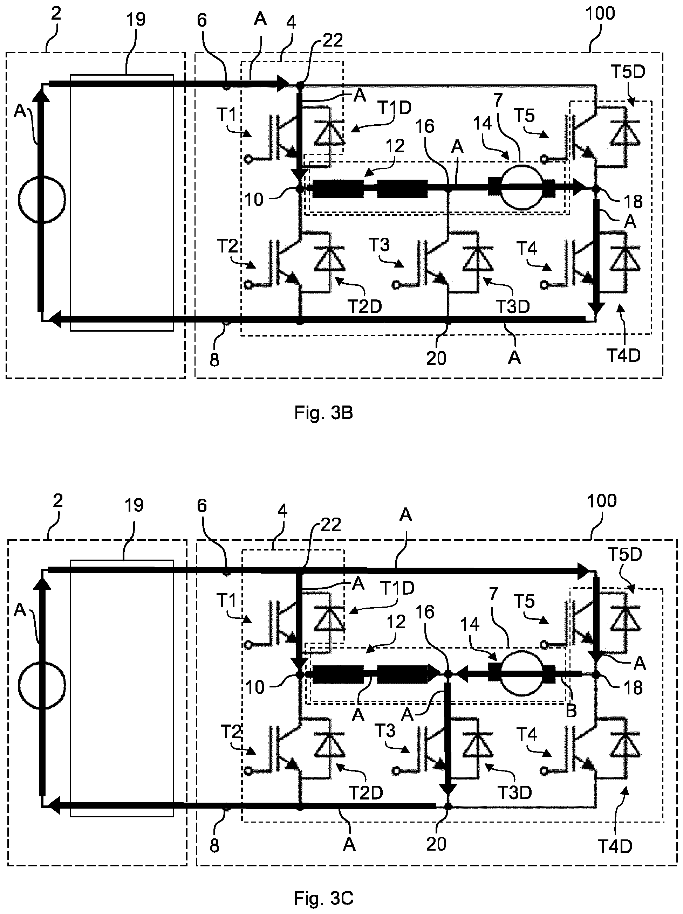

Die elektrische Antriebseinheit 100 der Fig. 3A weist einen ähnlichen Aufbau wie die elektrische Antriebseinheit 100 der Fig. 2A auf. Nachfolgend werden nur die Unterschiede zur elektrischen Antriebseinheit 100 der Fig. 2A erläutert. Zusätzlich zur Fig. 2A weist die elektrische Antriebseinheit 100 der Fig. 3A ein fünftes Halbleiterbauelement T5 auf. Dieses ist beispielhaft als ein IGBT mit parallel dazu geschalteter Freilaufdiode T5D ausgebildet. Das fünfte Halbleiterbauelement T5 ist über einen dritten Knoten 18 mit der Rotorwicklung 14 verbunden und ist über einen fünften Knoten 22 direkt mit einem ersten Anschluss 6 der Anschlusseinheit 6, 8 verbunden. Ferner ist das leitfähige Bauelement T4 in Fig. 3A als ein viertes Halbleiterbauelement T4 und ebenfalls beispielhaft als ein IGBT mit parallel dazu geschalteter Freilaufdiode T4D ausgebildet. Auch ist das zweite Halbleiterbauelement T2 in Fig. 3 als ein IGBT mit parallel dazu geschalteter Freilaufdiode T2D ausgebildet.

Fig. 3B zeigt ein schematisches Stromflussdiagramm eines Speisestroms im Motorbetrieb eines Elektromotors 7 innerhalb der Schaltungstopologie der elektrischen Antriebseinheit 100 gemäß Fig. 3A. Der Speisestromfluss im Motorbetrieb in Fig. 3B ist mit dem Speisestromfluss im Motorbetrieb in Fig. 2B identisch, weshalb hier auf eine Erklärung verzichtet wird. Es sei angemerkt, dass das Halbleiterbauelement T4 hierbei dauerhaft in einem leitenden Zustand ist. Weiterhin sind im Motorbetrieb das zweite und fünfte Halbleiterbauelement T2, T5 dauerhaft in einem nicht-leitenden Zustand.

Fig. 3C zeigt ein schematisches Stromflussdiagramm im Bremsbetrieb eines Elektromotors 7 innerhalb der Schaltungstopologie der elektrischen Antriebseinheit 100 gemäß Fig. 3A. In dem Bremsbetrieb werden die jeweiligen Halbleiterbauelemente wie folgt angesteuert:

In einem ersten Schritt wird das vierte Halbleiterbauelement T4 in einen nicht-leitenden Zustand zum Schalten des Elektromotors 7 von einem Motorbetrieb in einen Bremsbetrieb versetzt. In einem zweiten Schritt werden das dritte Halbleiterbauelement T3 und das fünfte Halbleiterbauelement T5 in einen leitenden Zustand zum Umpolen einer an der Rotorwicklung 14 anliegenden Eingangsspannung im Vergleich zum Motorbetrieb versetzt. In einem dritten Schritt werden das vierte Halbleiterbauelement T4 und das fünfte Halbleiterbauelement T5 in Abhängigkeit eines vorbestimmten Schwellwerts $I_L$ (siehe Fig. 6) für einen Rotorstrom $I_R(t)$ (siehe Fig. 6) durch die Rotorwicklung 14 abwechselnd gegengleich in einen leitenden Zustand und in einen nicht-leitenden Zustand versetzt, um den Rotorstrom $I_R(t)$ zu begrenzen. Der Rotorstrom $I_R(t)$ wird vorzugsweise auf einen vorbestimmten Schwellwert begrenzt. Beispielsweise ist hierzu eine Strommesseinheit (nicht dargestellt) vorgesehen, die zum Überwachen des Rotorstroms $I_R(t)$ eingerichtet ist. Das vierte und das fünfte Halbleiterbauelement T4, T5 bilden insbesondere eine rotorseitige zweite Halbbrücke aus. In einem vierten Schritt wird das erste Halbleiterbauelement T1 abwechselnd in einen leitenden Zustand und in einen nicht-leitenden Zustand versetzt, um einen Statorstrom $I_S(t)$ (siehe Fig. 6) durch die Statorwicklung 12 in Abhängigkeit einer aktuellen Drehzahl n(t) (siehe Fig. 6) des Elektromotors 7 zu regeln. Der Statorstrom $I_S(t)$ wird vorzugsweise auf einen drehzahlabhängigen Wert geregelt. Beispielsweise ist hierzu eine weitere Strommesseinheit (nicht dargestellt) vorgesehen, die zum Überwachen des Statorstroms $I_R(t)$ eingerichtet ist. Wenn die Drehzahl n(t) des Elektromotors 7 einen vorbestimmten Schwellwert erreicht hat, wird der Elektromotor 7 vorzugsweise komplett von der Energiequelle 2 getrennt. Der Bremsvorgang ist damit abgeschlossen.

Im Bremsbetrieb befindet sich insbesondere das dritte Halbleiterbauelement T3 dauerhaft in einem leitenden Zustand. Infolgedessen sind die Stator- und die Rotorwicklung 12, 14 nicht mehr in Reihe geschaltet. Der Elektromotor 7 wird deshalb als eine Nebenschlussmaschine und nicht mehr als eine Reihenschlussmaschine (siehe Fig. 3B) betrieben. Die Regelung des Statorstroms $I_S(t)$ durch die Statorwicklung 12 erfolgt (wie im Antriebsfall) insbesondere durch die statorseitige erste Halbbrücke umfassend das erste und das zweite Halbleiterbauelement T1, T2. Die Regelung des Rotorstroms $I_R(t)$ durch die Rotorwicklung 14 erfolgt durch die rotorseitige zweite Halbbrücke umfassend das vierte und fünfte Halbleiterbauelement T4, T5. Eine an der Rotorwicklung 14 induzierte Spannung wird vorzugsweise durch einen gemäß der Lenz'schen Regel im Bremsbetrieb induzierten Rotorstrom $I_R(t)$ in der Rotorwicklung 14 hervorgerufen. Der induzierte Rotorstrom $I_R(t)$ in der Rotorwicklung 14 wird insbesondere durch die Umpolung (siehe oben, zweiter Schritt) der Eingangsspannung an der Rotorwicklung 14 hervorgerufen. Da dieser Stromfluss derart gerichtet ist, dass das durch diesen hervorgerufene Magnetfeld seiner Ursache entgegen wirkt, entsteht ein Bremsmoment, das der Drehung des Rotors entgegenwirkt. Somit wird der Elektromotor 7 abgebremst.

Im Bremsbetrieb des Elektromotors 7 fließt ein Speisestrom, wie durch die Pfeile A in Fig. 3C dargestellt ist, von der Energiequelle 2 über einen ersten Anschluss 6 der Anschlusseinheit 6, 8 und über einen fünften Knoten 22 durch das erste Halbleiterbauelement T1, von dem ersten Halbleiterbauelement T1 über einen ersten Knoten 10 durch die Statorwicklung 12, von der Statorwicklung 12 über einen zweiten Knoten 16 durch das dritte Halbleiterbauelement T3, von dem dritten Halbleiterbauelement T3 über einen vierten Knoten 20 und über einen zweiten Anschluss 8 der Anschlusseinheit 6, 8 zurück zu der Energiequelle 2. Zusätzlich fließt der Speisestrom von der Energiequelle 2 über den ersten Anschluss 6 der Anschlusseinheit 6, 8 über den fünften Knoten 22 durch das fünfte Halbleiterbauelement T5 zu einem dritten Knoten 18. Durch die Umpolung der Eingangsspannung (siehe oben, zweiter Schritt) an der Rotorwicklung 14 fließt der Speisestrom nun in entgegengesetzter Richtung durch die Rotorwicklung (im Vergleich zum Motorbetrieb). Gleichzeitig wird in der Rotorwicklung 14 ein Strom induziert, der in die gleiche Richtung fließt, so dass die beiden Ströme sich betragsmäßig addieren. Wie durch den Pfeil B in Fig. 3C dargestellt, fließt der induzierte Strom von dem dritten Knoten 18 durch die Rotorwicklung 14 zu dem zweiten Knoten 16.

In den Fig. 3A - 3C gilt insbesondere: wenn beispielswiese der Speisestrom durch die statorseitige erste Halbbrücke zu hoch wird, wird das erste Halbleiterbauelement T1 in einen nicht-leitenden Zustand versetzt und das zweite Halbleiterbauelement T2 in einen leitenden Zustand versetzt, damit der Speisestrom über letzteres abklingen kann. Wenn andererseits insbesondere der Strom durch die rotorseitige zweite Halbbrücke, der sich insbesondere aus dem Speisestrom und dem induzierten Strom zusammensetzt, zu hoch wird, wird das fünfte Halbleiterbauelement T5 in einen nicht-leitenden Zustand versetzt und das vierte Halbleiterbauelement T4 in einen leitenden Zustand versetzt, damit der Strom über letzteres abklingen kann.

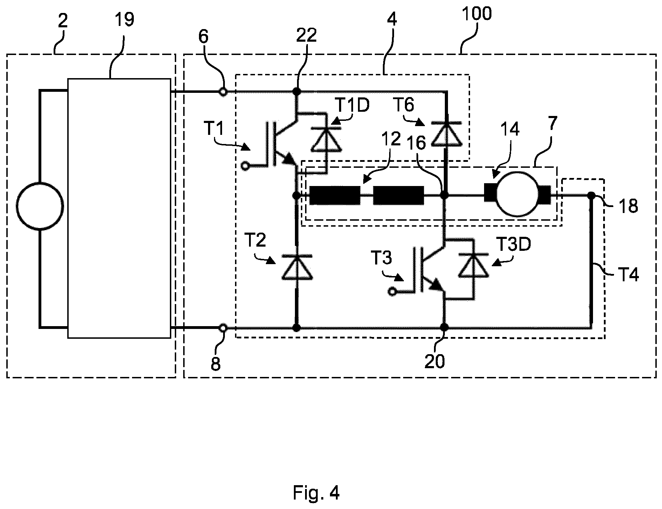

Fig. 4 zeigt eine schematische Ansicht einer dritten Ausführungsform einer Schaltungstopologie einer elektrischen Antriebseinheit 100.

Die elektrische Antriebseinheit 100 der Fig. 4 weist einen ähnlichen Aufbau wie die elektrische Antriebseinheit 100 der Fig. 2A auf. Nachfolgend werden nur die Unterschiede zur elektrischen Antriebseinheit 100 der Fig. 2A erläutert. Die Ansteuerschaltung 4 der Fig. 4 weist ein weiteres Halbleiterbauelement T6 auf. Das weitere Halbleiterbauelement T6 ist über den zweiten Knoten 16 mit der Rotorwicklung 14 und der Statorwicklung 12 verbunden und ist über einen fünften Knoten 22 direkt mit einem ersten Anschluss 6 einer Anschlusseinheit 6, 8 verbunden. Das weitere Halbleiterbauelement T6 ist in der Fig. 4 insbesondere als eine Diode ausgebildet. Ein Kathoden-Anschluss der Diode ist mit dem fünften Knoten 22 verbunden, während ein Anoden-Anschluss der Diode mit dem zweiten Knoten 16 verbunden ist. Damit ist das als Diode ausgebildete weitere Halbleiterbauelement T6 insbesondere in Sperrrichtung zu dem Speisestrom der Energiequelle 2 angeordnet. Das zweite Halbleiterbauelement T2 der Fig. 4 ist wie in Fig. 2A insbesondere als eine Diode ausgebildet und, wie in Fig. 2A erläutert, verschalten.

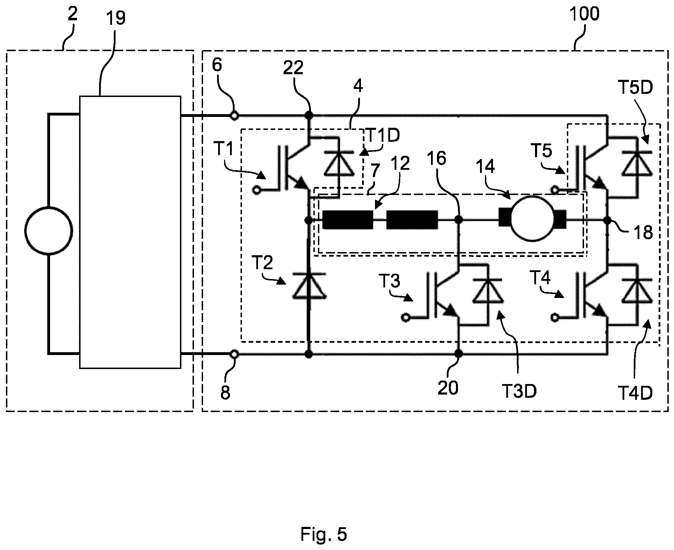

Fig. 5 zeigt eine schematische Ansicht einer vierten Ausführungsform einer Schaltungstopologie einer elektrischen Antriebseinheit 100.

Die elektrische Antriebseinheit 100 der Fig. 5 weist einen ähnlichen Aufbau wie die elektrische Antriebseinheit 100 der Fig. 3A auf. Nachfolgend werden nur die Unterschiede zur elektrischen Antriebseinheit 100 der Fig. 3A erläutert. Das zweite Halbleiterbauelement T2 der Fig. 5 ist wie in Fig. 2A insbesondere als eine Diode ausgebildet und, wie in Fig. 2A erläutert, verschalten.

Fig. 6 zeigt ein schematisches Diagramm eines Ablaufs eines Steuerverfahrens zum Abbremsen eines Elektromotors 7 (siehe Fig. 1, 2A, 2B, 2C, 3A, 3B, 3C, 4, 5), beispielsweise des Elektromotors 7 der elektrischen Handwerkzeugmaschine 1 gemäß Fig. 1. Das schematische Diagramm der Fig. 6 umfasst drei Graphen 51, 52 und 53. Ein erster Graph 51 zeigt den Verlauf der aktuellen Drehzahl n des Elektromotors 7 (vertikale Achse) in Abhängigkeit der Zeit t (horizontale Achse). Ein zweiter Graph 52 zeigt den Verlauf des Rotorstroms $I_R$ in dem Elektromotor 7 (vertikale Achse) in Abhängigkeit der Zeit t (horizontale Achse). Ein dritter Graph 53 zeigt den Verlauf des Statorstroms $I_S$ in dem Elektromotor 7 (vertikale Achse) in Abhängigkeit der Zeit t (horizontale Achse).

Zunächst befindet sich die elektrische Handwerkzeugmaschine 1 im Motorbetrieb (Zeitintervall zwischen $t_0$ und $t_1$). Dabei fließt insbesondere ein Rotorstrom $I_R(t)$ (siehe zweiter Graph 52, Zeitintervall zwischen $t_0$ und $t_1$) durch eine Rotorwicklung 14 (siehe Fig. 1, 2A, 2B, 2C, 3A, 3B, 3C, 4, 5) in Abhängigkeit einer Soll-Drehzahl des Elektromotors 7 sowie ein Statorstrom $I_S(t)$ (siehe dritter Graph 53, Zeitintervall zwischen $t_0$ und $t_1$) durch eine Statorwicklung 12 (siehe Fig. 1, 2A, 2B, 2C, 3A, 3B, 3C, 4, 5) in Abhängigkeit der Soll-Drehzahl des Elektromotors 7.

Wenn sich beispielsweise in dem Motorbetrieb beim Arbeiten mit der elektrischen Handwerkzeugmaschine 1 das Bohrwerkzeug 5 (siehe Fig. 1) der elektrischen Handwerkzeugmaschine 1 in einem Armierungseisen verkeilt, wird dies durch einen Sensor, wie einen Gyrosensor, als ein Betriebsunterbrechungszustand der elektrischen Handwerkzeugmaschine 1 erfasst.

Zum Zeitpunkt $t_1$ wird der Betriebsunterbrechungszustand erfasst, bei welchem der Elektromotor 7 von einem Motorbetrieb in einen Bremsbetrieb umgeschaltet wird. Hierzu wird beispielsweise ein Speisestromfluss durch die Statorwicklung 12 und/oder die Rotorwicklung 14 unterbrochen. Nach dem Umschalten wird auf ein Abklingen des Rotorstroms $I_R(t)$ gewartet, was beispielsweise in wenigen Millisekunden erfolgt. Der Rotorstrom $I_R(t)$ gilt als abgeklungen, wenn dieser einen vorbestimmten Schaltschwellwert erreicht oder unterschreitet. Vorliegend ist der vorbestimmte Schaltschwellwert 0 A, der zum Zeitpunkt $t_2$ (siehe zweiter Graph 52) erreicht wird.

Anschließend wird beispielsweise eine Eingangsspannung an der Rotorwicklung 14 umgepolt. Dies hat zur Folge, dass der Rotorstrom $I_R(t)$ in entgegengesetzter Richtung (im Vergleich zum Zeitintervall zwischen $t_0$ und $t_1$) fließt und ansteigt. Daraufhin wird der Rotorstrom $I_R(t)$ der Rotorwicklung 14 in Abhängigkeit eines vorbestimmten Schwellwerts $I_L$ (siehe zweiter Graph 52) begrenzt. Insbesondere wird der Rotorstrom auf einen konstanten oder zeitlich variablen, insbesondere drehzahlabhängigen, Wert begrenzt oder geregelt. In Fig. 6 ist in dem zweiten Graph 52 ab dem Zeitpunkt $t_2$ dargestellt, dass der Rotorstrom $I_R(t)$ nach der Umpolung auf bis zu -20A ansteigt (entspricht insbesondere dem vorbestimmten Schwellwert $I_L$) und dort begrenzt wird. Beispielsweise wird die Begrenzung in der in Fig. 3A gezeigten Ausführungsform mittels eines abwechselnden gegengleichen Versetzens eines vierten Halbleiterbauelements T4 (siehe Fig. 3A, 3B, 3C, 5) und eines fünfte Halbleiterbauelements T5 (siehe Fig. 3A, 3B, 3C, 5) in einen leitenden Zustand und in einen nicht-leitenden Zustand in Abhängigkeit des vorbestimmten Schwellwerts $I_L$ für den Rotorstrom $I_R(t)$ durchgeführt.

Nachdem die Eingangsspannung an der Rotorwicklung 14 umgepolt wurde (siehe oben), wird beispielsweise auf einen Ablauf eines vorbestimmten Zeitraums gewartet (Zeitintervall zwischen $t_2$ und $t_3$). Der vorbestimmte Zeitraum beträgt insbesondere bis zu 2 ms oder bis zu 3 ms. Es sei angemerkt, dass das Abwarten dieses Zeitraums nicht zwingend notwendig ist. Während dieses vorbestimmten Zeitraums ist das erste Halbleiterbauelement T1 (siehe Fig. 2A, 2B, 2C, 3A, 3B, 3C, 4, 5) in der Ausführungsform der Fig. 2A, 2B und 2C, in der Ausführungsform der Fig. 3A, 3B und 3C, in der Ausführungsform der Fig. 4 und in der Ausführungsform der Fig. 5 vorzugsweise in einem nicht-leitenden Zustand. Nach Ablauf des vorbestimmten Zeitraums, zum Zeitpunkt $t_3$, wird der Statorstrom $I_S(t)$ durch die Statorwicklung 12 in Abhängigkeit der aktuellen Drehzahl n(t) des Elektromotors 7, insbesondere mit einem Absinken der aktuellen Drehzahl n(t), erhöht. Dies geschieht in dem Zeitintervall zwischen den Zeitpunkten $t_3$ und $t_4$ in dem dritten Graph 53 der Fig. 6. Dies hat vorteilhaft eine Erhöhung des Bremsmoments, mit dem der Rotor abgebremst wird, zur Folge.

Mit anderen Worten bleibt beispielsweise im ersten Moment nach der Durchführung der Umpolung der Eingangsspannung an der Rotorwicklung 14 das erste Halbleiterbauelement T1 in einem nicht-leitenden Zustand. Dies hat zur Folge, dass die Statorwicklung 12 unbestromt bleibt und somit nicht mit dem Rotorstrom $I_R(t)$ ansteigt, der nach der Umpolung ansteigt (siehe das Intervall zwischen t2 und t3). Nach Ablauf des vorbestimmten Zeitraums, welcher beispielsweise 2 ms oder 3 ms beträgt, wird das erste Halbleiterbauelement T1 in einen leitenden Zustand versetzt. Dadurch wird die Statorwicklung 12 bestromt und der Statorstrom durch die Statorwicklung 12 kann beispielsweise mit einem Absinken der aktuellen Drehzahl n(t) des Elektromotors 7 kontrolliert erhöht werden (siehe das Zeitintervall zwischen den Zeitpunkten $t_3$ und $t_4$ in dem dritten Graph 53 der Fig. 6). Durch diese Maßnahme können der Rotor- und der Statorstrom $I_R(t)$, $I_S(t)$ des Elektromotors 7 unabhängig voneinander eingestellt werden.

BEZUGSZEICHENLISTE

| | |
|---|---|
| 1 | elektrische Handwerkzeugmaschine |
| 2 | Energiequelle |
| 3 | Werkzeugaufnahme |
| 4 | Ansteuerschaltung |
| 5 | Bohrwerkzeug |
| 6 | Anschlusseinheit |
| 7 | Elektromotor |
| 8 | Anschlusseinheit |
| 9 | Handgriff |
| 10 | Knoten |
| 11 | Taster |
| 12 | Statorwicklung |
| 13 | Leitungsanordnung |
| 14 | Rotorwicklung |
| 15 | Anschlussterminal |
| 16 | Knoten |
| 17 | Stecker |
| 18 | Knoten |
| 19 | Gleichrichter |
| 20 | Knoten |
| 22 | Knoten |
| 51 | Graph |
| 52 | Graph |
| 53 | Graph |
| 100 | elektrische Antriebseinheit |

| | |
|---|---|
| A | Pfeil |
| B | Pfeil |
| $I_L$ | Schwellwert |
| $I_R(t)$ | Rotorstrom |

$I_S(t)$      Statorstrom
$n(t)$      Drehzahl
$t$      Zeit
$t_0$      Zeitpunkt
$t_1$      Zeitpunkt
$t_2$      Zeitpunkt
$t_3$      Zeitpunkt
$t_4$      Zeitpunkt
T1      Halbleiterbauelement
T1D      Freilaufdiode
T2      Halbleiterbauelement
T2D      Freilaufdiode
T3      Halbleiterbauelement
T3D      Freilaufdiode
T4      leitfähiges Bauelement
T4D      Freilaufdiode
T5      Halbleiterbauelement
T5D      Freilaufdiode
T6      Halbleiterbauelement

**Patentansprüche**

1. Elektrische Antriebseinheit (100) für eine elektrische Handwerkzeugmaschine (1), mit einem Elektromotor (7) mit einer Statorwicklung (12) und einer Rotorwicklung (14), einer Ansteuerschaltung (4) zum Ansteuern des Elektromotors (7) und einer Anschlusseinheit (6, 8) zum Koppeln einer Energiequelle (2) zum Antreiben des Elektromotors (7), wobei die Statorwicklung (12) über einen ersten Knoten (10) mit einer statorseitigen ersten Halbbrücke umfassend ein erstes Halbleiterbauelement (T1) und ein zweites Halbleiterbauelement (T2) verbunden ist und über einen zweiten Knoten (16) mit der Rotorwicklung (14) verbunden ist, wobei die Rotorwicklung (14) mit einem dritten Knoten (18) verbunden ist, der über ein leitfähiges Bauelement (T4) mit der Anschlusseinheit (6, 8) verbunden ist, **dadurch gekennzeichnet, dass** die
Ansteuerschaltung (4) ein drittes Halbleiterbauelement (T3) umfasst, das über den zweiten Knoten (16) mit der Rotorwicklung (14) und der Statorwicklung (12) verbunden ist und das über einen vierten Knoten (20) direkt mit der Anschlusseinheit (6, 8) verbunden ist.

2. Elektrische Antriebseinheit nach Anspruch 1, **dadurch gekennzeichnet, dass** die Ansteuerschaltung (4) ferner ein weiteres Halbleiterbauelement (T6) umfasst, das über den zweiten Knoten (16) mit der Rotorwicklung (14) und der Statorwicklung (12) verbunden ist und über einen fünften Knoten (22) direkt mit der Anschlusseinheit (6, 8) verbunden ist.

3. Elektrische Antriebseinheit nach Anspruch 1 oder 2, **dadurch gekennzeichnet, dass** die Ansteuerschaltung (4) dazu eingerichtet ist, das erste Halbleiterbauelement (T1) in einen nicht-leitenden Zustand zu versetzen, um einen Speisestromfluss zu unterbrechen.

4. Elektrische Antriebseinheit nach einem der Ansprüche 1 - 3, **dadurch gekennzeichnet, dass** die Ansteuerschaltung (4) dazu eingerichtet ist, das dritte Halbleiterbauelement (T3) in einen leitenden Zustand zu versetzen, um die Rotorwicklung (14) parallel zu der Statorwicklung (12) zu schalten.

5. Elektrische Antriebseinheit nach Anspruch 4, **dadurch gekennzeichnet, dass** die Ansteuerschaltung (4) dazu eingerichtet ist, zusätzlich zu dem dritten Halbleiterbauelement (T3) das erste Halbleiterbauelement (T1) in einen leitenden Zustand zu versetzen, um einen magnetischen Fluss bereitzustellen, so dass an der Rotorwicklung (14) eine Spannung induziert wird, die im Vergleich zu einer im Motorbetrieb des Elektromotors (7) an der Rotorwicklung (14) anliegenden Spannung entgegengesetzte Richtung aufweist.

6. Elektrische Antriebseinheit nach einem der Ansprüche 1 - 5, **gekennzeichnet durch** eine erste Strommesseinheit zum Bestimmen eines aktuellen Rotorstroms $I_R(t)$, wobei die Ansteuerschaltung (4) dazu eingerichtet ist, das erste Halbleiterbauelement (T1) in Abhängigkeit des bestimmten aktuellen Rotorstroms $I_R(t)$ und eines vorbestimmten Schwellwerts ($I_L$) des Rotorstroms $I_R(t)$ in einen nicht-leitenden Zustand zu versetzen, um den Rotorstrom $I_R(t)$ zu begrenzen.

7. Elektrische Antriebseinheit nach Anspruch 1, **dadurch gekennzeichnet, dass** das leitfähige Bauelement (T4) ein viertes Halbleiterbauelement (T4) umfasst und die Ansteuerschaltung (4) ferner ein fünftes Halbleiterbauelement (T5) umfasst, das über den dritten Knoten (18) mit der Rotorwicklung (14) verbunden ist und das über einen fünften Knoten (22) direkt mit der Anschlusseinheit (6, 8) verbunden ist.

8. Elektrische Antriebseinheit nach Anspruch 7, **dadurch gekennzeichnet, dass** die Ansteuerschaltung (4) dazu eingerichtet ist, das vierte Halbleiterbauelement (T4) in einen nicht-leitenden Zustand zu versetzen, um einen Rotorstrom $I_R(t)$ durch die Rotorwicklung (14) zu unterbrechen.

9. Elektrische Antriebseinheit nach Anspruch 7 oder 8, **dadurch gekennzeichnet, dass** die Ansteuerschaltung (4) dazu eingerichtet ist, das dritte und das fünfte Halbleiterbauelement (T3, T5) in einen leitenden Zustand zum Umpolen einer an der Rotorwicklung (14) anliegenden Eingangsspannung im Vergleich zum Motorbetrieb zu versetzen.

10. Elektrische Antriebseinheit nach einem der Ansprüche 7 - 9, **gekennzeichnet durch** eine erste Strommesseinheit zum Bestimmen eines aktuellen Rotorstroms $I_R(t)$, wobei die Ansteuerschaltung (4) dazu eingerichtet ist, das fünfte Halbleiterbauelement (T5) und das vierte Halbleiterbauelement (T4) in Abhängigkeit des bestimmten aktuellen Rotorstroms $I_R(t)$ und eines vorbestimmten Schwellwerts $(I_L)$ des Rotorstroms $I_R(t)$ abwechselnd gegengleich in einen leitenden Zustand und in einen nicht-leitenden Zustand zu versetzen, um den Rotorstrom $I_R(t)$ zu begrenzen.

11. Elektrische Antriebseinheit nach Anspruch 10, **dadurch gekennzeichnet, dass** die Ansteuerschaltung (4) dazu eingerichtet ist, das fünfte Halbleiterbauelement (T5) und das vierte Halbleiterbauelement (T4) in Abhängigkeit des bestimmten aktuellen Rotorstroms $I_R(t)$, des vorbestimmten Schwellwerts $(I_L)$ des Rotorstroms $I_R(t)$ und einer aktuellen Drehzahl $(n(t))$ des Elektromotors (7) abwechselnd gegengleich in einen leitenden Zustand und in einen nicht-leitenden Zustand zu versetzen, um den Rotorstrom $I_R(t)$ zu begrenzen.

12. Elektrische Antriebseinheit nach einem der Ansprüche 7 - 11, **gekennzeichnet durch** eine zweite Strommesseinheit zum Bestimmen eines aktuellen Statorstroms $(I_S(t))$, wobei die Ansteuerschaltung (4) dazu eingerichtet ist, das erste Halbleiterbauelement (T1) abwechselnd in einen leitenden Zustand und in einen nicht-leitenden Zustand zu versetzen, um einen Statorstrom $(I_S(t))$ durch die Statorwicklung (12) in Abhängigkeit einer aktuellen Drehzahl $(n(t))$ des Elektromotors (7) zu regeln.

13. Elektrische Antriebseinheit nach Anspruch 9, **dadurch gekennzeichnet, dass** die Ansteuerschaltung (4) dazu eingerichtet ist, nach Ablauf eines vorbestimmten Zeitraums, nachdem das dritte und das fünfte Halbleiterbauelement (T3, T5) in einen leitenden Zustand versetzt wurden, das erste Halbleiterbauelement (T1) abwechselnd in einen leitenden Zustand und in einen nicht-leitenden Zustand zu versetzen, um einen Statorstrom $(I_S(t))$ durch die Statorwicklung (14) in Abhängigkeit einer aktuellen Drehzahl $(n(t))$ des Elektromotors (7) zu regeln.

14. Elektrische Antriebseinheit nach einem der Ansprüche 1 - 13, **dadurch gekennzeichnet, dass** diese zum Betrieb an einer Gleichspannungsquelle, einer pulsierenden Gleichspannungsquelle oder einer Wechselspannungsquelle mit einem Gleichrichter eingerichtet ist.

15. Elektrische Handwerkzeugmaschine (1) mit einer elektrischen Antriebseinheit (100) nach einem der Ansprüche 1 - 14.

**Claims**

1. Electric drive unit (100) for an electric handheld power tool (1), having an electric motor (7) with a stator winding (12) and a rotor winding (14), an actuating circuit (4) for actuating the electric motor (7) and a connection unit (6, 8) for coupling an energy source (2) for driving the electric motor (7), wherein the stator winding (12) is connected via a first node (10) to a stator-side first half-bridge comprising a first semiconductor component (T1) and a second semiconductor component (T2) and is connected via a second node (16) to the rotor winding (14), wherein the rotor winding (14) is connected to a third node (18) which is connected via a conductive component (T4) to the connection unit (6, 8), **characterized in that** the actuating circuit (4) comprises a third semiconductor component (T3) which is connected via the second node (16) to the rotor winding (14) and the stator winding (12) and which is connected via a fourth node (20) directly to the connection unit (6, 8).

2. Electric drive unit according to Claim 1, **characterized in that** the actuating circuit (4) further comprises a further semiconductor component (T6) which is connected via the second node (16) to the rotor winding (14) and the stator winding (12) and is connected via a fifth node (22) directly to the connection unit (6, 8).

3. Electric drive unit according to Claim 1 or 2, **characterized in that** the actuating circuit (4) is designed to move the first semiconductor component (T1) to a non-conductive state in order to interrupt a supply current flow.

4. Electric drive unit according to one of Claims 1 - 3, **characterized in that** the actuating circuit (4) is designed to move the third semiconductor component (T3) to a conductive state in order to connect the rotor winding (14) in parallel with the stator winding (12).

5. Electric drive unit according to Claim 4, **characterized in that** the actuating circuit (4) is designed to move the first semiconductor component (T1) to a conductive state in addition to the third semiconductor component (T3) in order to provide a magnetic flux, so that a voltage is induced at the rotor winding (14) in the opposite direction compared to a voltage applied to the rotor winding (14) during motor operation of the electric motor (7).

6. Electric drive unit according to one of Claims 1 - 5, **characterized by** a first current measuring unit for determining a current rotor current $I_R(t)$, wherein the actuating circuit (4) is designed to move the first semiconductor component (T1) as a function of the determined current rotor current $I_R(t)$ and a predetermined threshold value ($I_L$) of the rotor current $I_R(t)$ to a non-conductive state in order to limit the rotor current $I_R(t)$.

7. Electric drive unit according to Claim 1, **characterized in that** the conductive component (T4) comprises a fourth semiconductor component (T4) and the actuating circuit (4) further comprises a fifth semiconductor component (T5) which is connected via the third node (18) to the rotor winding (14) and which is connected via a fifth node (22) directly to the connection unit (6, 8).

8. Electric drive unit according to Claim 7, **characterized in that** the actuating circuit (4) is designed to move the fourth semiconductor component (T4) to a non-conductive state in order to interrupt a rotor current $I_R(t)$ through the rotor winding (14).

9. Electric drive unit according to Claim 7 or 8, **characterized in that** the actuating circuit (4) is designed to move the third semiconductor component (T3) and the fifth semiconductor component (T5) to a conductive state for reversing the polarity of an input voltage applied to the rotor winding (14) compared to motor operation.

10. Electric drive unit according to one of Claims 7 - 9, **characterized by** a first current measuring unit for determining a current rotor current $I_R(t)$, wherein the actuating circuit (4) is designed to move the fifth semiconductor component (T5) and the fourth semiconductor component (T4) as a function of the determined current rotor current $I_R(t)$ and a predetermined threshold value ($I_L$) of the rotor current $I_R(t)$ alternately in synchronism with opposite senses to a conductive state and to a non-conductive state in order to limit the rotor current $I_R(t)$.

11. Electric drive unit according to Claim 10, **characterized in that** the actuating circuit (4) is designed to move the fifth semiconductor component (T5) and the fourth semiconductor component (T4) as a function of the determined current rotor current $I_R(t)$, the predetermined threshold value ($I_L$) of the rotor current $I_R(t)$ and a current rotation speed (n(t)) of the electric motor (7) alternately in synchronism with opposite senses to a conductive state and to a non-conductive state in order to limit the rotor current $I_R(t)$.

12. Electric drive unit according to one of Claims 7 - 11, **characterized by** a second current measuring unit for determining a current stator current ($I_S(t)$), wherein the actuating circuit (4) is designed to move the first semiconductor component (T1) alternately to a conductive state and to a non-conductive state in order to regulate a stator current ($I_S(t)$) through the stator winding (12) as a function of a current rotation speed (n(t)) of the electric motor (7).

13. Electric drive unit according to Claim 9, **characterized in that** the actuating circuit (4) is designed, after a predetermined period of time has elapsed after the third semiconductor component (T3) and the fifth semiconductor component (T5) have been moved to a conductive state, to move the first semiconductor component (T1) alternately to a conductive state and to a non-conductive state in order to regulate a stator current ($I_S(t)$) through the stator winding (14) as a function of a current rotation speed (n(t)) of the electric motor (7).

14. Electric drive unit according to one of Claims 1 - 13, **characterized in that** it is designed for operation from a DC voltage source, a pulsating DC voltage source or an AC voltage source with a rectifier.

**15.** Electric handheld power tool (1) having an electric drive unit (100) according to one of Claims 1 - 14.

**Revendications**

**1.** Unité d'entraînement électrique (100) destinée à une machine-outil électrique portative (1), comprenant un moteur électrique (7) doté d'un enroulement de stator (12) et d'un enroulement de rotor (14), un circuit de commande (4) pour commander le moteur électrique (2) et une unité de raccordement (7, 8) pour le couplage d'une source d'énergie (7) destinée à entraîner le moteur électrique (6), l'enroulement de stator (12) étant relié par l'intermédiaire d'un premier nœud (10) à un premier demi-pont côté stator comprenant un premier composant semi-conducteur (T1) et un deuxième composant semi-conducteur (T2) et par l'intermédiaire d'un deuxième nœud (16) à l'enroulement de rotor (14), l'enroulement de rotor (14) étant relié à un troisième nœud (18) qui est relié à l'unité de raccordement (6, 8) par l'intermédiaire d'un composant conducteur (T4), **caractérisé en ce que** le circuit de commande (4) comprend un troisième composant semi-conducteur (T3) qui est relié par l'intermédiaire du deuxième nœud (16) à l'enroulement de rotor (14) et à l'enroulement de stator (12) et qui est relié directement à l'unité de raccordement (6, 8) par l'intermédiaire d'un quatrième nœud (20).

**2.** Unité d'entraînement électrique selon la revendication 1, **caractérisée en ce que** le circuit de commande (4) comprend en outre un autre composant semi-conducteur (T6) qui est relié à l'enroulement de rotor (14) et à l'enroulement de stator (12) par l'intermédiaire du deuxième nœud (16) et directement à l'unité de raccordement (6, 8) par l'intermédiaire d'un cinquième nœud (22).

**3.** Unité d'entraînement électrique selon la revendication 1 ou 2, **caractérisée en ce que** le circuit de commande (4) est conçu pour faire passer le premier composant semi-conducteur (T1) dans un état non conducteur afin d'interrompre un courant d'alimentation.

**4.** Unité d'entraînement électrique selon l'une quelconque des revendications 1 à 3, **caractérisée en ce que** le circuit de commande (4) est conçu pour faire passer le troisième composant semi-conducteur (T3) dans un état conducteur afin de connecter l'enroulement de rotor (14) en parallèle avec l'enroulement de stator (12).

**5.** Unité d'entraînement électrique selon la revendication 4, **caractérisée en ce que** le circuit de commande (4) est conçu pour faire passer le premier composant semi-conducteur (T1) dans un état conducteur, en plus du troisième composant semi-conducteur (T3), afin de fournir un flux magnétique, de sorte qu'une tension soit induite au niveau de l'enroulement de rotor (14), laquelle présente une direction opposée par rapport à une tension appliquée à l'enroulement de rotor (14) lors d'un fonctionnement en mode moteur du moteur électrique (7).

**6.** Unité d'entraînement électrique selon l'une quelconque des revendications 1 à 5, **caractérisée par** une première unité de mesure de courant destinée à déterminer un courant de rotor $I_R(t)$, le circuit de commande (4) étant conçu pour faire passer le premier composant semi-conducteur (T1) dans un état non conducteur en fonction du courant de rotor $I_R(t)$ et d'une valeur de seuil prédéterminée ($I_L$) du courant de rotor $I_R(t)$, afin de limiter le courant de rotor $I_R(t)$.

**7.** Unité d'entraînement électrique selon la revendication 1, **caractérisée en ce que** le composant conducteur (T4) comprend un quatrième composant semi-conducteur (T4) et **en ce que** le circuit de commande (4) comprend en outre un cinquième composant semi-conducteur (T5) qui est relié à l'enroulement de rotor (14) par l'intermédiaire du troisième nœud (18) et qui est relié directement à l'unité de raccordement (6, 8) par l'intermédiaire d'un cinquième nœud (22).

**8.** Unité d'entraînement électrique selon la revendication 7, **caractérisée en ce que** le circuit de commande (4) est conçu pour faire passer le quatrième composant semi-conducteur (T4) dans un état non conducteur afin d'interrompre un courant de rotor $I_R(t)$ à travers l'enroulement de rotor (14).

**9.** Unité d'entraînement électrique selon la revendication 7 ou 8, **caractérisée en ce que** le circuit de commande (4) est conçu pour faire passer les troisième et cinquième composants semi-conducteurs (T3, T5) dans un état conducteur afin d'inverser la polarité d'une tension d'entrée appliquée à l'enroulement de rotor (14) par rapport au mode moteur.

**10.** Unité d'entraînement électrique selon l'une quelconque des revendications 7 à 9, **caractérisée par** une première unité de mesure de courant destinée à déterminer un courant de rotor $I_R(t)$, le circuit de commande (4) étant conçu pour faire passer le cinquième composant semi-conducteur (T5) et le quatrième composant semi-conducteur (T4)

EP 4 342 067 B1

alternativement dans un état conducteur et dans un état non conducteur en fonction du courant de rotor $I_R(t)$ et d'une valeur de seuil prédéterminée ($I_L$) du courant de rotor $I_R(t)$, afin de limiter le courant de rotor $I_R(t)$.

11. Unité d'entraînement électrique selon la revendication 10, **caractérisée en ce que** le circuit de commande (4) est conçu pour faire passer le cinquième composant semi-conducteur (T5) et le quatrième composant semi-conducteur (T4) alternativement dans un état conducteur et dans un état non conducteur en fonction du courant de rotor $I_R(t)$ déterminé, de la valeur de seuil prédéterminée ($I_L$) du courant de rotor $I_R(t)$ et d'une vitesse de rotation actuelle (n(t)) du moteur électrique (7), afin de limiter le courant de rotor $I_R(t)$.

12. Unité d'entraînement électrique selon l'une quelconque des revendications 7 à 11, **caractérisée par** une deuxième unité de mesure de courant destinée à déterminer un courant de stator ($I_S(t)$), le circuit de commande (4) étant conçu pour faire passer alternativement le premier composant semi-conducteur (T1) dans un état conducteur et dans un état non conducteur, afin de réguler un courant de stator ($I_S(t)$) à travers l'enroulement de stator (12) en fonction d'une vitesse de rotation actuelle (n(t)) du moteur électrique (7).

13. Unité d'entraînement électrique selon la revendication 9, **caractérisée en ce que** le circuit de commande (4) est conçu pour faire passer le premier composant semi-conducteur (T1) alternativement dans un état conducteur et dans un état non conducteur après expiration d'une période de temps prédéterminée faisant suite au passage des troisième et cinquième composants semi-conducteurs (T3, T5) dans un état conducteur, afin de réguler un courant de stator ($I_S(t)$) à travers l'enroulement de stator (14) en fonction d'une vitesse de rotation actuelle (n(t)) du moteur électrique (7).

14. Unité d'entraînement électrique selon l'une quelconque des revendications 1 à 13, **caractérisée en ce qu'**elle est conçue pour fonctionner sur une source de tension continue, une source de tension continue pulsée ou une source de tension alternative dotée d'un redresseur.

15. Machine-outil électrique portative (1) dotée d'une unité d'entraînement électrique (100) selon l'une quelconque des revendications 1 à 14.

Fig. 1

Fig. 2A

Fig. 2B

Fig. 2C

Fig. 3A

Fig. 3B

Fig. 3C

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5828194 A